# EUROPEAN PATENT SPECIFICATION

(11) **EP 3 103 782 B1**
(45) Date of publication and mention of the grant of the patent: **26.02.2020**
(21) Application number: 15461537.1
(22) Date of filing: 10.06.2015
(51) Int. Cl.: C05G 3/00

(54) **A COMBINATION OF SURFACTANTS FOR LIQUID AQUEOUS FERTILIZER COMPOSITION**
EINE KOMBINATION VON TENSIDEN FÜR WÄSSRIGE FLÜSSIGE DÜNGEMITTEL
LA COMBINAISON DE TENSIOACTIFS POUR COMPOSITION AQUEUSE LIQUIDE D'ENGRAIS

(43) Date of publication of application: 14.12.2016
(73) Proprietor: Przedsiebiorstwo Produkcyjno-Consultingowe Adob Sp. z o.o. s.k., 61-070 Poznan (PL)
(72) Inventor: Nawrocki, Adam, 61-306 Poznan (PL); Mrozek-Niecko, Anika, 62-020 Swarzedz (PL); Januszkiewicz, Karolina, 61-015 Poznan (PL); Chojnacka -Jankowiak, Magdalena, 63-004 Gowarzewo (PL)
(74) Representative: Sitkowska, Jadwiga

(56) References cited:
- EP-A1- 2 272 338
- WO-A1-95/18531
- WO-A1-2006/079079

## Description

### Field of the invention

The present invention relates to the field of agrochemical mineral fertilizer compositions. In particular, it relates to a liquid aqueous mineral fertilizer composition that includes a combination of surfactants as an adjuvant and can be used as a foliar fertilizer.

### Background art

It is a common practice in agrochemical field to supplement plants with essential major elements of plants nutrition and/or with micronutrients by applying aqueous solutions of macro- and micronutrients directly to the crop. Such aqueous solutions are generally applied foliarly to the crop, by spraying an aqueous solution of the nutrient directly to the leaves to deliver it to the plant. Such a technic is also called foliar feeding and is considered the most efficient method of increasing yield and plant health.

According to the present state of the knowledge, foliar fertilization can increase yields from 12% to 25% when compared to conventional soil fertilization and allows to overcome the problem of low transport of nutrients from the soil to the plants under low moisture condition. This is also the fastest way of correcting symptoms of deficiencies appearing during the vegetation period. Foliar feeding is also believed more environmentally friendly than soil fertilization. Generally, liquid aqueous formulations (solutions) are used for foliar application.

The effectiveness of the foliar nutrient formulation depends on many factors. Nutrients uptake is determined by properties of the leaves surface, especially their waxy cuticle, as well as diffusion and absorption of the nutrients by the leaves. Diffusion and absorption are dependent on the dissolution of the nutrients in a solution and the time of residence of the nutrients dissolved in a solution on leaves surface, and are highly dependent on the type of a fertilizer formulation.

Preferred are liquid aqueous foliar nutrient formulations, wherein components are completely dissolved in water, i.e. are not aqueous suspensions. To make liquid aqueous foliar fertilizer compositions application more efficient, different additives or adjuvants can be incorporated.

Surfactants are known additives for foliar agrochemical compositions, both in fertilizer and plant protection (pesticide) products. Generally, surfactants can be added in situ to the fertilizer solution/formulation before spraying it on plants, and the information on the types of recommended surfactants to be added before treatment as a tank additive is the part of product leaflet. Surfactants can be also incorporated into the formulation during its manufacture without necessity of adding and mixing them in a tank by a final user. So far, products with surfactants incorporated into the formulation are known on the market only for pesticide products.

Selection of the surfactant for mineral fertilizer/nutrient to be incorporated in the liquid formulation is not simple. Among others, it is difficult because of ionic character of the aqueous fertilizer/nutrient solution and possible desalting. It is also difficult to select a versatile surfactant that would be able to provide expected enhanced performance independently of the type of the leaves, i.e. would ensure good absorption also for pubescent plants, i.e. those with surface of the leaves bearing trichomes, such as small hairs. Furthermore, surfactant must be also very efficient so as to allow effective reduction of surface tension with only small amount thereof added to solution prepared for spray application.

According to WO2011/103617, an oil is added to foliar nutrients compositions to increase the uptake of essential microelements by the crop. As an optional component, a surfactant may be added to prepare emulsion of oil and oil-soluble components and water soluble components. Disclosed are foliar nutrients essential elements compositions comprising from 5 to 80% by weight of an oil and up to 30% by weight on a dry weight active basis of a surfactant.

According to WO99/55645, to improve effective dispersion and stability, disclosed is an adjuvant composition for mineral fertilizers, including nitrogenous fertilizers. The composition comprises an oil component, a nonionic surfactant, and an anionic surfactant. It is stated that an oil component tends to soften the outer waxy layer of the plant surface, thereby enabling the better penetration of active substance to the plant.

According to WO2014/047602, to improve storage stability and decrease foam generation, an anionic surfactant comprising a carboxylated alcohol alcoxylate can be added as an adjuvant to an agrochemical composition of an active substance. The active substance is stated to include a nitrogenous fertilizer, such as ammonium sulfate.

The amount of surfactants potentially useful in agrochemical compositions is enormous. However, it was found by the present applicant that in practice requirements to be fulfilled by suitable surfactant are very demanding. First of all, a surfactant must be well soluble in water, since a fertilizer nutrient ingredient is dissolved in water. Furthermore, it must be miscible with fertilizer nutrient ingredients and cannot lose its properties after mixing, for example by salting-out. Finally, must be effective after spraying and be able to perform its function in the wide pH range, which in case of mineral fertilizer products is 2.5 to 6.5. It is also desirable that the amount of surfactants and other adjuvants added to the composition is as small as possible without loss of efficiency.

Furthermore, it was the aim of the invention to develop surfactant that is miscible with fertilizers, does not form oily layer or emulsion and does not separate in a final fertilizer product during its storage.

Furthermore, it was found by the present applicant that some of surfactants potentially available for incorporation in aqueous fertilizer compositions are effective only on smooth leaves and are ineffective on the plants with smaller amount of waxes and higher amount of hairs on the surface. Hairs retain fertilizer droplets and do not allow them to get close to the leaf surface and cover it. On the other hand, it was found that surfactants effective for hairy (pubescent) plants will be also effective for plants with smooth and waxy leaves. However, in the case of plants with smooth and waxy leaves, effective surfactants suitable for difficult plants may after ideal coverage of the surface partly wash over slippy surface.

### Detailed description of the invention

The present invention provides a liquid aqueous fertilizer composition, comprising:
(a) a first surfactant of the formula (I)

   R¹-(OCH₂CHR²)ₓ(OCH₂CHR³)_{y}OR⁴ (I)

   wherein R¹ represents linear or branched C8-C18 alkyl, R² and R³ are selected from the group consisting of CH₃ and CH₂CH₃, with the provision that R² and R³ are different, R⁴ represents H or linear or branched C1-C8 alkyl, x is an integer from 1 to 10, and y is an integer from 3 to 10, the sum x + y being in the range from 5 to 20;
(b) a second surfactant of the formula (II)

   R⁵-(OCH₂CHR⁶)_{z}-OR⁷ (II)

   wherein R⁵ represents linear or branched C16-C18alkyl, R⁶ represents H or CH₃, R⁷ represents H or linear or branched C1-C6 alkyl, and z is 8, 9 or 10;
(c) a mineral fertilizer ingredient selected from a macronutrient fertilizer, secondary macronutrient fertilizer, micronutrient fertilizer, and mixtures thereof; and
(d) water.

The composition of the invention is oil-free and is liquid, i.e. is a solution and does not form a suspension.

There is also disclosed herein a surfactant combination consisting of
- a first surfactant of the formula (I)

   R¹-(OCH₂CHR²)ₓ(OCH₂CHR³)_{y}OR⁴ (I)

   wherein R¹ represents linear or branched C8-C18 alkyl, R² and R³ are selected from the group consisting of CH₃ and CH₂CH₃, with the provision that R² and R³ are different, R⁴ represents H or linear or branched C1-C8 alkyl, x is an integer from 1 to 10, and y is an integer from 3 to 10, the sum x + y being in the range from 5 to 20, and
- a second surfactant of the formula (II)

   R⁵-(OCH₂CHR⁶)_{z}-OR⁷ (II)

   wherein R⁵ represents linear or branched C16-C18alkyl, R⁶ represents H or CH₃, R⁷ represents H or linear or branched C1-C6 alkyl, and z is 8, 9 or 10.

The surfactant combination as defined above is oil-free.

In another aspect, the object of the invention is also the use of a surfactant combination as defined above as an adjuvant for the preparation of a liquid aqueous fertilizer composition.

By "adjuvant" or "adjuvant additive" (utility adjuvant) it is meant an additive for a fertilizer composition that is not nutrient element ingredient and that influences utility physico-chemical properties of the working liquid prepared from the fertilizer composition.

In another aspect, the object of the invention is also a method for feeding or fertilizing plants which comprises spraying the aqueous fertilizer composition as defined above onto the plant, especially on the foliage of the plant.

It was found that the composition of the invention and the surfactant combination when used as an adjuvant additive according to the invention allow to obtain very efficient activity of the fertilizer, by providing good adhesion, and upon treatment droplets cover leaf blades and do not bounce from them. Another advantage is longer drying and better penetration, better coverage of leaves, resistance to falling under wind conditions, and ability to restore the activity the next day under conditions of adequate humidity.

Furthermore, it was found that compositions of the invention are effective for both plants with smooth (waxy) leaves, like sweet cherry, cabbage or lettuce, and pubescent (hairy) plants, like soya or grains.

Yet another advantage of the composition of the invention is that it is free of oil components included in the prior art aqueous fertilizers compositions (oil-free).

Yet another advantage of the composition of the invention and the surfactant combination for use according to the invention is the absence of anionic surfactants that could interfere with cations present in mineral nutrient components thereby diminishing their penetration into the plant.

It will be appreciated by a skilled person that C8-C18 alkyl, C16-C18 alkyl, C1-C6 alkyl and C1-C8 alkyl define alkyl groups having indicated number of carbon (C) atoms in the chain and encompass also mixtures of alkyl from indicated ranges of C atoms, respectively.

According to the invention, first surfactant of the formula (I) comprises propoxylene and butoxylene units. It will be appreciated by a skilled person that formula (I) covers molecules wherein propoxylene and butoxylene units are present in block configuration of propoxylene and butoxylene units along the chain of the molecule, as well as molecules wherein propoxylene and butoxylene units are present in random configuration along the chain of the molecule.

According to the invention, the sum of propoxylene and butoxylene units in formula (I) is at least 5, i.e. the sum x + y is from 5 to 20. Advantageously, the sum x + y is from 7 to 12, especially 8.

In a preferred embodiment, in the first surfactant of formula (I) R¹ is linear or branched C8-C12 alkyl, R² is CH₃, R³ is CH₂CH₃, R⁴ is H, x is 4 to 7, and y is 3 to 5.

In another preferred embodiment, in the second surfactant of formula (II) R⁵ is linear or branched C16-C18 alkyl, R⁶ is H, R⁷ is H, and z is 9 or 10.

Preferably, in the first surfactant R¹ is linear C8 alkyl, R² is CH₃, R³ is CH₂CH₃, R⁴ is H, x is 5, and y is 3, and in the second surfactant R⁵ is linear C16 alkyl, R⁶ is H, R⁷ is H, and z is 10.

In a preferred embodiment of the invention, the amount of sum of the first and second surfactant is from 0.5 to 4%, preferably 0.5 to 1%, by weight with respect to the total weight of the aqueous composition.

In a preferred embodiment of the invention, the weight ratio of the first surfactant and the second surfactant is in the range from 1:99 to 99:1, preferably 50:50 (i.e. 1:1).

Said first surfactant in the composition of the invention and the combination for use according to the invention overcomes very well the barrier of hairs on the leaves and ensures very good coverage and retention on the leaves even for pubescent plants. However, it does not mix well with most aqueous mineral fertilizer compositions.

The second surfactant has similar properties as the first surfactant, although it is less effective in foliar applications. However, it is very well soluble in aqueous mineral fertilizer compositions and serves two main purposes. It aids physical incorporation of the first surfactant into fertilizer formulation and is sufficiently effective to cover smooth leaves adequately. In the case of difficult pubescent leaves aids sticking fertilizer droplets to the leaves surface. In other words, first surfactant overcomes hairs barrier and causes deliquescence of a droplet, while the second surfactant sticks it to the leaves surface.

Combination of the first and second surfactant allows to dissolve the first surfactant in the aqueous fertilizer composition and ensure efficient action of the fertilizer on the foliage.

Selection of the second surfactant according to the invention allows to ensure its solubilization when it is introduced to the aqueous fertilizer composition in very small amounts comparing to other systems while still observing enhancement of efficiency.

The use of the combination of surfactants as defined above allows to avoid addition of oil adjuvants and anionic surfactants. The total amount of the combination in the aqueous fertilizer composition does not exceed 4% by weight with respect to the total weight of the composition. This is very advantageous from the environmental point of view.

The amount of the combination of surfactants (i.e. the total sum of the first and second surfactant) and the weight ratio of the first and second surfactant in the liquid aqueous fertilizer composition will depend on the type and the amount of mineral fertilizer/nutrient component in the composition. For most applications, the amount of the combination from 0.5 to 1% by weight with respect to the total composition with will be sufficient.

The weight ratio of the first to the second surfactant in the combination of surfactants and in the liquid aqueous fertilizer composition of the invention will be determined by the type of the plants. For pubescent plants, such as soya, bean, all sort of grains (wheat, rye, barley), tomato, cucumber, the amount of the first surfactant will be higher (closer to higher limit of the range), while can be closer to lower limit for non-pubescent plants, like sweet cherry or rape, grape, pear, peaches, mandarins, strawberries. The ratio of the first to the second surfactants about 1:1 seems at present to be the most versatile and applicable for most of plants.

Suitable weight ratio of the first to the second surfactant in the combination of surfactants and the amount of total combination in the liquid aqueous fertilizer composition of the invention for a given fertilizer ingredients can be easily determined by a skilled person by preparing a mixture of aqueous solution of fertilizer ingredients with the combination of surfactants and visual observation of the mixture. The mixture should form a clear solution without cloudiness that is stable during storage, i.e. no separation of phases is observed.

The liquid aqueous fertilizer composition of the invention can be the composition for fertilizing/feeding plants directly. The composition can be used as a sprayable composition for spraying on plants, preferably to the foliage of plants.

Preferably, the liquid aqueous fertilizer composition of the invention is concentrated composition, supplied to the final user as a concentrate and diluted with water by the final user in a work tank, in accordance with recommendations of the manufacturer to obtain working solution. Generally concentrations of the concentrate in the working solution are 1 to 6% v/v, usually such as 3% v/v.

In accordance with the invention, the surfactant combination as defined above can be incorporated in the liquid aqueous fertilizer composition supplied for the final user.

In another embodiment, the combination can be also used as a spray tank additive, added to and mixed with aqueous fertilizer composition by the final user just before its use in the spray treatment.

The macronutrient fertilizer of the composition of the invention includes essential element (ingredient) selected from the group consisting of nitrogen, phosphorus, potassium, and mixtures thereof.

The macronutrient fertilizer (ingredient) of the composition of the invention may also include secondary essential element selected from the group consisting of magnesium, calcium, and mixtures thereof.

It will be appreciated for a skilled person that all fertilizer elements will be incorporated as a chemical compounds including essential element in question.

The weight concentration of an essential element may be calculated on the basis of the weight of the essential element in question, or alternatively on the basis of the compound including this element and incorporated in the composition of the invention. It is a routine skill to convert concentration based on the weight of an element to concentration based on the weight of the compound including this element and vice-versa.

The source of nitrogen as an essential element in the macronutrient fertilizer ingredient can be so called nitrogenous (N) fertilizers, i.e. nitrogen based fertilizers which comprise nitrogen containing salts. Nitrogen-based fertilizers are well known in the art and include urea-derived nitrogen, ammonium-derived nitrogen and nitrate-derived nitrogen. The source of urea-derived nitrogen can be urea, urea phosphate and UAN (aqueous solution of urea and ammonium nitrate). The source of ammonium-derived nitrogen can be ammonium salt, such as for example, ammonium nitrate, ammonium sulfate, calcium ammonium sulfate, ammonium formate, ammonium carbonate, ammonium bicarbonate, ammonium phosphate, ammonium hydrogendiphosphate, ammonium hydrogen-monophosphate, ammonium sodium hydrogenphosphate, and their mixtures. The source of nitrate-derived nitrogen can be a nitrate salt, such as for example potassium nitrate, ammonium nitrate and magnesium nitrate. It will be appreciated by a skilled person that some salts can be also a source of another element, such as magnesium.

The source of phosphorus as an essential element can be phosphorus salts which are well known in the art, and include for example monoamoniumphosphate (MAP), diamoniumphosphate (DAP), monopotasiumphosphate (MKP), dipotasiumphosphate, or amoniumpolyphosphate.

The source of potassium as an essential element can be potassium salts or oxides or hydroxide which are well known in the art, and include for example potassium oxide, potassium hydroxide, potassium chloride, potassium sulfate, potassium carbonate, or potassium nitrate.

Macronutrient ingredient source can be also multinutrients (complex) fertilizers, which are the most common and include of two or more nutrient (NPK) elements.

The composition of the invention can also include secondary macronutrient element source (ingredient) selected from the group consisting of calcium salts, magnesium salts and theirs mixtures. Calcium is supplied as superphosphate, calcium nitrate, or calcium chloride solutions. Magnesium is supplied a magnesium nitrate, magnesium sulphate, or magnesium chloride.

The composition of the invention can also include micronutrients elements (ingredients), including iron (Fe), manganese (Mn), molybdenum (Mo), zinc (Zn), boron (B) and copper (Cu). These elements can be provided as chemical compounds, usually water-soluble salts like nitrate, sulphate, or chloride. Micronutrients can be advantageously present as a chelate complex, e.g. with EDTA (ethylenediaminetetraacetic acid), IDHA (iminodisuccinic acid), DTPA (diethylenetriaminepentaacetic acid), or HBED (N,N'-di(2-hydroxybenzyl)ethylenediamine-N,N'-diacetic acid) and its derivatives and salts. This relates especially to those microelements that are prone to convert to insoluble (bio-unavailable) compounds at moderate soil pH and phosphate concentrations, such as iron and zinc.

It will be appreciated by a skilled person that in some embodiments the composition of the invention may include as a fertilizer macronutrient ingredient(s) as a sole fertilizer active ingredient.

In another embodiments the composition of the invention may include as a fertilizer ingredient macronutrient element(s) with the addition of secondary macronutrient element.

In another embodiments, the composition may include both macronutrient element and micronutrient element.

In yet another embodiment, the composition of the invention may include macronutrient element, secondary macronutrient element and micronutrient element.

It will be also appreciated by a skilled person that macronutrient element and secondary macronutrient element may be in the same chemical compound.

The micronutrient needs depend on the type of the plant concerned. For example, sugar beets require boron, and legumes require cobalt. Therefore, the type of the micronutrient in the composition, if any, will depend on the type of target plants.

The concentration of the fertilizer ingredient will depend on the type of the fertilizer ingredient and its selection will be in routine and common general knowledge of a skilled person.

For example, macronutrient element or sum of different macronutrient elements can be present in the amount such as from 1-44% w/w, especially 24-44% w/w.

Micronutrient element or sum of different micronutrient elements can be present in the amount of 0.1 up to 14% w/w. The amount of micronutrient(s) when present as the addition to NPK fertilizer is usually about 0.1% w/w and up to 14% in strictly micronutrient formulations.

Except components a) to d), the composition of the invention can include, when necessary, further utility adjuvant components known in the art of preparing aqueous fertilizer compositions.

Generally, combination of surfactants as defined above is a low-foaming one. Therefore, the addition of an anti-foaming agent, the purpose of which is to rupture foam bubbles to reduce foaming of the aqueous composition or hinder the formation of foam, is not essential. The foam can be formed only for some surfactants combinations and depends essentially to a great extent on their ratio and pH of the fertilizer composition. Therefore, in some embodiments, the composition of the invention includes an anti-foaming agent. The anti-foaming agent can be added in small amount mainly as a prevention means, to aid filling of final container with the aqueous fertilizer composition.

The anti-foaming agent will be included especially for concentrated fertilizer compositions.

Anti-foaming agents are well known in the art. The anti-foaming agent can be selected for example from the group of ethoxylated propoxylated alcohols C12-C14.

Other utility adjuvants that can be incorporated in the liquid aqueous fertilizer composition of the invention include wetting agents, dyes, drift control agents, thickening agents, deposition agents (stickers), water conditioners, compatibility agents, pH regulators, humectants, and UV absorbers, depending on the needs.

Important is pH regulator, such as for example ammonium hydroxide solution.

It will be appreciated by a skilled person that water is present in the composition and its percentage will depend on the percentages of all other components in the composition so as to make up 100% in total.

The aqueous composition can be prepared in a manner known in the art.

Below the invention will be illustrated by means of the non-limiting Examples.

### Examples

General procedure for preparing the composition of the invention.

Typically, an aqueous solution of the fertilizer is first prepared and then the aqueous solution of the fertilizer is placed (pumped-up) in a confection tank, from which it is distributed into final containers of the desired volume.

Into a separate tank, the first and second surfactant and optionally the anti-foaming agent are added and mixed together. This allows easy incorporation of the first surfactant, which is non-miscible with the aqueous fertilizer solution.

After distribution of the fertilizer into final containers, the surfactant mixture prepared in a separate tank is then dosed and poured onto the surface of the aqueous solution of the fertilizer in final containers. After pouring, the surfactants will mix automatically with the aqueous solution of the fertilizer, without any stirring.

Using this general procedure, liquid aqueous fertilizer compositions of Examples 1 to 4 were prepared.

### Example 1

Fertilizer of the composition. w/w: Mn 10%, MgO 2%, N 6,5%, d 1.4 g/cm³, pH 1.0-3.0

Formulation for 1 kg:
Manganese nitrate hexahydrate 526.3 g
Magnesium nitrate hexahydrate 129 g
Water 344.7 g
First surfactant: 5 g

   R¹-(OCH₂CHR²)x(OCH₂CHR³)yOR⁴
R¹ = linear alkyl C8, R² = CH₃, R³ = CH₂CH₃, R⁴ = H, x = 5, y = 3
Second surfactant: 10 g

   R⁵-(OCH₂CHR⁶)_{z}-OR⁷
R⁵ = linear alkyl C16, R6 = H, R⁷ = H, z = 10.

Concentrated liquid aqueous fertilizer composition for dilution before use by the final user was obtained.

### Example 2

Fertilizer of the composition, w/w: NPK 6-29-7 (N 6%, P₂O₅ 29%, K₂O₇ 7%), d 1.38 g/cm³; pH 7-8

Formulation for 1 kg:
Monopotassium phosphate: 147 g
Potassium hydroxide: 65.5 g
Urea: 15.5 g
Water: 134 g
First surfactant as in Example 1: 5 g
Second surfactant as in Example 1: 15 g.

Concentrated liquid aqueous fertilizer composition for dilution before use by the final user was obtained.

### Example 3

Fertilizer of the composition, w/w: N 27%, MgO 3.2% B 0.02%, Cu 0.20%, Fe 0.02%, Mn 1.0%, Mo 0.005%, Zn 0.01%; d 1.34 g/cm³, pH 4-5

Formulation for 1 kg:
UAN 32 (urea-ammonium nitrate solution grade 32 (%N, w/w)): 426 g
Urea: 287.6 g
Magnesium nitrate hexahydrate: 63.8 g
Magnesium chloride hexahydrate: 117.95 g
Boric acid: 1.17 g
Amonium molibdenate: 0.09 g
MnEDTA: 78 g
CuEDTA: 14.3 g
ZnEDTA: 0.66 g
FeEDTA: 1.65 g
Ammonia, as 25% w/w ammonium hydroxide solution: 0.2 ml (as pH regulator)
First surfactant as in Example 1: 5 g
Second surfactant as in Example 1: 5 g.

Concentrated liquid aqueous fertilizer composition for dilution before use by the final user was obtained.

### Example 4

Fertilizer of the composition, w/w: N 12%, P₂O₅ 4%, K₂O 6%, MgO 0.2%, B 0.02%, Cu 0.01%, Fe 0.01%, Mn 0.01%, Mo 0.005%, Zn 0.005%; d 1.200 , pH 2-3
Formulation for 1kg
Water: 480 g
Phosphoric acid 75%: 72.3 g
KOH: 47.45 g
Nitric acid (54%): 75.5g
Ammonia, as 25% w/w ammonium hydroxide solution: 19.57 g (as pH regulator)
Potassium sulphate: 33.14 g
Potassium chloride: 9.8 g
Magnesium chloride hexahydrate: 10.0 g
Urea: 240.71 g
Ammonium molibdenate: 0.02 g
Boric acid - 0.582 g
MnIDHA: 1.1 g
CuIDHA: 1.0 g
ZnIDHA: 0.5 g
First surfactant as in Example 1: 1 g
Second surfactant as in Example 1: 9 g.

Concentrated liquid aqueous fertilizer composition for dilution before use by the final user was obtained.

### Example 5

### Selection of the weight ratio of the first and second surfactants

Tests of stability of the fertilizer mixture with surfactants were performed for the combination of surfactants used in the composition of Example 4. Samples were maintained and observed visually for 6 months at constant temperature +20 °C. The results of the observation of the mixture behavior are presented below in Table 1.

**Table 1**

| Sample No. | Dose of first surfactant | Dose of second surfactant | Behavior of the sample in time |
|---|---|---|---|
| | [g] per 100 g of the fertilizer | [g] per 100 g of the fertilizer | |
| **1** | 0.5 | 0.5 | Lack of miscibility with the fertilizer, first surfactant forms during stirring fine "droplets" suspended in the whole volume of the fertilizer. This gives the picture of cloudiness of the fertilizer. When stirring is stopped, thin layer of the surfactant separates on the surface within few minutes. |
| **2** | 0.4 | 0.6 | |
| **3** | 0.3 | 0.7 | |
| **4** | 0.2 | 0.8 | Mixture stable only for 2 weeks |
| **5** | 0.1 | 0.9 | Mixture stable for the whole observation time |

On the basis of the above results, the ratio 1 to 9 of the first to the second surfactant was selected for fertilizer ingredients from Example 4.

Tests of stability of the fertilizer mixture with surfactants were performed for the combination of surfactants used in the composition of Example 3. Samples were maintained and observed visually for 6 months at constant temperature +20 °C. The results of the observation of the mixture behavior are presented below in Table 2.

**Table 2**

| Sample No. | Dose of first surfactant | Dose of second surfactant | Behavior of the sample in time |
|---|---|---|---|
| | [g] per 100 g of the fertilizer | [g] per 100 g of the fertilizer | |
| **1** | 0.3 | 0.7 | Mixtures stable in time, no separation of surfactants, no oily layer |
| **2** | 0.5 | 0.5 | |
| **3** | 0.7 | 0.3 | |

On the basis of the above results, the ratio 1 to 1 (50 to 50) of the first to the second surfactant was selected for fertilizer ingredients from Example 3.

### Example 5

Tests of surface tension of working solution at different recommended doses were performed for the fertilizer of Example 4, with and without surfactants.

Recommended dose of the fertilizer composition is 4 to 12 1 of the concentrate per ha. Recommended dose of water for the preparation of working solution is 200 to 300 1.

On the basis of recommended doses, 2%, 3%, 4% and 5% v/v dilutions of the fertilizer composition (concentrate) of Example 3 with added surfactants were prepared.

Surface tensions of the dilutions are presented in Table 3 below.

**Table 3**

| Sample No. | **Fertilizer concentration in the working solution (% v/v)** | **Surface tension [mN/m]** |
|---|---|---|
| **1** | 3 - without surfactants | 72.3 |
| **2** | 2 | 39.3 |
| **3** | 3 | 35.9 |
| **4** | 4 | 34.5 |
| **5** | 5 | 31.9 |

## Claims

1. A liquid aqueous fertilizer composition, comprising:
(a) a first surfactant of the formula (I)
R¹-(OCH₂CHR²)ₓ(OCH₂CHR³)_{y}OR⁴ (I)
wherein R¹ represents linear or branched C8-C18 alkyl, R² and R³ are selected from the group consisting of CH₃ and CH₂CH₃, with the provision that R² and R³ are different, R⁴ represents H or linear or branched C1-C8 alkyl, x is an integer from 1 to 10, y is an integer from 3 to 10, and sum x + y is in the range from 5 to 20;
(b) a second surfactant of the formula (II)
R⁵-(OCH₂CHR⁶)_{z}-OR⁷ (II)
wherein R⁵ represents linear or branched C16-C18alkyl, R⁶ represents H or CH₃, R⁷ represents H or linear or branched C1-C6 alkyl, and z is 8, 9 or 10;
(c) a mineral fertilizer ingredient selected from a macronutrient fertilizer, secondary macronutrient fertilizer, micronutrient fertilizer, and mixtures thereof; and
(d) water.

2. The liquid aqueous fertilizer composition according to claim 1, wherein the amount of the sum of the first and second surfactant is from 0.5 to 4%, preferably 0.5 to 1%, by weight with respect to the total weight of the composition.

3. The liquid aqueous fertilizer composition according to claim 1 or 2, wherein the weight ratio of the first surfactant and the second surfactant is in the range from 1:99 to 99:1, preferably 50:50.

4. The liquid aqueous fertilizer composition according to any one of claims 1 to 3, wherein the macronutrient fertilizer includes essential element selected from the group consisting of nitrogen, phosphorus, potassium, and mixtures thereof.

5. The liquid aqueous fertilizer composition according to any one of claims 1 to 4, wherein the secondary macronutrient fertilizer includes essential element selected from the group consisting of calcium, magnesium, and mixtures thereof.

6. The liquid aqueous fertilizer composition according to any one of claims 1 to 5, wherein the micronutrient fertilizer includes essential element selected from the group consisting of Fe, Mn, B, Cu, Mo, Zn, and mixtures thereof.

7. Use of a surfactant combination consisting of
- a first surfactant of the formula (I)
R¹-(OCH₂CHR²)ₓ(OCH₂CHR³)_{y}OR⁴ (I)
wherein R¹ represents linear or branched C8-C18 alkyl, R² and R³ are selected from the group consisting of CH₃ and CH₂CH₃, with the provision that R² and R³ are different, R⁴ represents H or linear or branched C1-C8 alkyl, x is an integer from 1 to 10, y is an integer from 3 to 10, and sum x + y is in the range from 5 to 20; and
- a second surfactant of the formula (II)
R⁵-(OCH₂CHR⁶)_{z}-OR⁷ (II)
wherein R⁵ represents linear or branched C16-C18alkyl, R⁶ represents H or CH₃, R⁷ represents H or linear or branched C1-C6 alkyl, and z is 8, 9 or 10,
as an adjuvant additive for the preparation of a liquid aqueous mineral fertilizer composition.

8. The use according to claim 7, wherein the weight ratio of the first surfactant and the second surfactant is in the range from 1:99 to 99:1, preferably 50:50.

9. The use according to claim 7 or 8 as tank mix additive for the preparation of the liquid aqueous mineral fertilizer composition.

10. A method for fertilizing plants which comprises spraying the aqueous fertilizer composition according to any one of claims 1 to 6 onto the plant, especially on the foliage of the plant.

## Patentansprüche

1. Flüssige wässrige Düngemittelzusammensetzung, umfassend:
(a) ein erste Tensid der Formel (I)
R¹-(OCH2CHR²)ₓ(OCH₂CHR³)yOR⁴ (I),
worin R¹ für lineares oder verzweigtes C8-C18-Alkyl steht, R² und R³ aus der Gruppe bestehend aus CH₃ und CH₂CH₃ ausgewählt sind, mit der Maßgabe, dass R² und R³ unterschiedlich sind, R⁴ für H oder lineares oder verzweigtes C1-C8-Alkyl steht, x eine ganze Zahl von 1 bis 10 ist, y eine ganze Zahl von 3 bis 10 ist und die Summe x + y im Bereich von 5 bis 20 liegt;
(b) ein zweite Tensid der Formel (II)
R⁵-(OCH₂CHR⁶)_{z}-OR⁷ (II),
worin R⁵ für lineares oder verzweigtes C16-C18-Alkyl steht, R⁶ für H oder CH₃ steht, R⁷ für H oder lineares oder verzweigtes C1-C6-Alkyl steht und z 8, 9 oder 10 ist;
(c) einen Mineraldüngerkomponente ausgewählt aus einem Makronährstoffdünger, Sekundärmakronährstoffdünger, Mikronährstoffdünger und Mischungen davon; und
(d) Wasser.

2. Flüssige wässrige Düngemittelzusammensetzung nach Anspruch 1, wobei die Menge der Summe des ersten und des zweiten Tensids 0,5 bis 4 Gew .-%, vorzugsweise 0,5 bis 1 Gew .-%, bezogen auf das Gesamtgewicht der Zusammensetzung beträgt.

3. Flüssige wässrige Düngemittelzusammensetzung nach Anspruch 1 oder 2, wobei das Gewichtsverhältnis des ersten Tensids und des zweiten Tensids im Bereich von 1:99 bis 99: 1 liegt, vorzugsweise 50: 50.

4. Flüssige wässerige Düngemittelzusammensetzung nach einem der Ansprüche 1 bis 3, wobei der Makronährstoffdünger ein wesentliches Element umfasst, das aus der Gruppe ausgewählt ist, die aus Stickstoff, Phosphor, Kalium und Mischungen davon besteht.

5. Flüssige wässerige Düngemittelzusammensetzung nach einem der Ansprüche 1 bis 4, wobei der Sekundärmakronährstoffdünger ein wesentliches Element umfasst, das aus der Gruppe ausgewählt ist, die aus Calcium, Magnesium und Mischungen davon besteht.

6. Flüssige wässrige Düngemittelzusammensetzung nach einem der Ansprüche 1 bis 5, wobei der Mikronährstoffdünger ein wesentliches Element enthält, das aus der Gruppe ausgewählt ist, die aus Fe, Mn, B, Cu, Mo, Zn und Mischungen davon besteht.

7. Verwendung einer Tensidkombination bestehend aus
- eines ersten Tensids der Formel (I)
R¹-(OCH₂CHR²)ₓ(OCH₂CHR³)_{y}OR⁴ (I),
worin R¹ für lineares oder verzweigtes C8-C18-Alkyl steht, R² und R³ aus der Gruppe bestehend aus CH₃ und CH₂CH₃ ausgewählt sind, mit der Maßgabe, dass R² und R³ unterschiedlich sind, R⁴ für H oder lineares oder verzweigtes C1-C8-Alkyl steht, x eine ganze Zahl von 1 bis 10 ist, y eine ganze Zahl von 3 bis 10 ist und die Summe x + y im Bereich von 5 bis 20 liegt; und
- eines zweiten Tensids der Formel (II)
R⁵-(OCH₂CHR⁶)z-OR⁷ (II),
worin R⁵ für lineares oder verzweigtes C16-C18-Alkyl steht, R⁶ für H oder CH₃ steht, R⁷ für H oder lineares oder verzweigtes C1-C6-Alkyl steht und z ist 8, 9 oder 10,
als Adjuvans zur Herstellung einer flüssigen wässerigen Düngemittelzusammensetzung.

8. Verwendung nach Anspruch 7, wobei das Gewichtsverhältnis des ersten Tensids und des zweiten Tensids im Bereich von 1:99 bis 99: 1 liegt, vorzugsweise 50: 50.

9. Verwendung nach Anspruch 7 oder 8 als Tankmischungsadditiv zur Herstellung einer flüssigen wässerigen Düngemittelzusammensetzung.

10. Verfahren zum Düngen von Pflanzen, umfassend das Aufsprühen der wässrigen Düngemittelzusammensetzung nach einem der Ansprüche 1 bis 6 auf die Pflanze, insbesondere auf das Blattwerk der Pflanze.

## Revendications

1. Composition liquide aqueuse d'engrais, comprenant:
(a) un premier tensioactif de formule (I)
R¹-(OCH2CHR²)ₓ(OCH₂CHR³)yOR⁴ (I),
dans laquelle R¹ représente un groupe alkyle en C8-C18 linéaire ou ramifié, R² et R³ sont choisis dans le groupe constitué de CH₃ et CH₂CH₃, à condition que R² et R³ soient différents, R⁴ représente H ou un groupe alkyle en C1-C8 linéaire ou ramifié, x est un entier de 1 à 10, y est un entier de 3 à 10, et la somme x + y est dans la gamme de 5 à 20;
(b) un second tensioactif de formule (II)
R⁵-(OCH₂CHR⁶)_{z}-OR⁷ (II),
dans laquelle R⁵ représente un groupe alkyle en C16 à C18 linéaire ou ramifié, R⁶ représente H ou CH₃, R⁷ représente H ou un groupe alkyle en C1-C6 linéaire ou ramifié, et z est égal à 8, 9 ou 10;
(c) un ingrédient d'engrais minéral choisi parmi un engrais à base de macronutriments, un engrais à base de macronutriments secondaires, un engrais à base de micronutriments et leurs mélanges; et
(d) de l'eau.

2. Composition aqueuse liquide d'engrais selon la revendication 1, dans laquelle la quantité de la somme des premier et second tensioactifs va de 0,5 à 4%, de préférence de 0,5 à 1% en poids par rapport au poids total de la composition.

3. Composition aqueuse liquide d'engrais selon la revendication 1 ou 2, dans laquelle le rapport en poids du premier tensioactif et du second tensioactif est compris dans la gamme de 1:99 à 99: 1, de préférence de 50:50.

4. Composition aqueuse liquide d'engrais selon l'une quelconque des revendications 1 à 3, dans laquelle l'engrais à base de macronutriments comprend un élément essentiel choisi dans le groupe comprenant l'azote, le phosphore, le potassium et leurs mélanges.

5. Composition aqueuse liquide d'engrais selon l'une quelconque des revendications 1 à 4, dans laquelle l'engrais à base de macronutriments secondaires comprend un élément essentiel choisi dans le groupe constitué par le calcium, le magnésium et leurs mélanges.

6. Composition aqueuse liquide d'engrais selon l'une quelconque des revendications 1 à 5, dans laquelle l'engrais à base de micronutriments comprend un élément essentiel choisi dans le groupe comprenant Fe, Mn, B, Cu, Mo, Zn et leurs mélanges.

7. Utilisation d'une combinaison de tensioactifs consistant en:
- un premier tensioactif de formule (I)
R¹-(OCH2CHR²)ₓ(OCH₂CHR³)yOR⁴ (I),
où R¹ représente un groupe alkyle en C8-C18 linéaire ou ramifié, R² et R³ sont choisis dans le groupe constitué de CH₃ et CH₂CH₃, à condition que R² et R³ sont différents, R⁴ représente H ou un groupe alkyle en C1-C8 linéaire ou ramifié, x est un entier de 1 à 10, y est un entier de 3 à 10, et la somme x + y est dans la gamme de 5 à 20; et
- un second agent tensioactif de formule (II)
R⁵-(OCH₂CHR⁶)_{z}-OR⁷ (II),
dans laquelle R⁵ représente un groupe alkyle en C16 à C18 linéaire ou ramifié, R⁶ représente H ou CH₃, R⁷ représente H ou un groupe alkyle en C1-C6 linéaire ou ramifié, et z est égal à 8, 9 ou 10,
en tant qu'adjuvant pour la préparation d'une composition aqueuse liquide d'engrais.

8. Utilisation selon la revendication 7 dans laquelle le rapport en poids du premier tensioactif et du second tensioactif est compris dans la gamme de 1:99 à 99: 1, de préférence de 50:50.

9. Utilisation selon la revendication 7 ou 8 en tant qu'additif de mélange en cuve pour la préparation d'une composition aqueuse d'engrais.

10. Procédé pour fertiliser des plantes, qui comprend l'étape consistant à pulvériser la composition aqueuse d'engrais selon l'une quelconque des revendications 1 à 6 sur la plante, en particulier sur le feuillage de la plante.
